# EUROPEAN PATENT APPLICATION

(11) **EP 4 664 847 A1**
(43) Date of publication of application: **17.12.2025**
(21) Application number: 23923702.7
(22) Date of filing: 09.10.2023
(51) Int. Cl.: H04L 43/50

(54) **AUTOMATED TESTING METHOD, APPARATUS AND SYSTEM, AND COMPUTING DEVICE CLUSTER**

(30) Priority: 24.02.2023 CN 202310166595
(71) Applicant: Huawei Cloud Computing Technologies Co., Ltd., Guiyang, Guizhou 550025 (CN)
(72) Inventor: ZHOU, Yanchun, Guiyang, Guizhou 550025 (CN); LI, Junwu, Guiyang, Guizhou 550025 (CN); QIN, Yonggang, Guiyang, Guizhou 550025 (CN)
(74) Representative: Körber, Martin Hans
(86) International application number: PCT/CN2023/123547
(87) International publication number: WO 2024/174537

(57) **Abstract**

A dialing test method, apparatus, and system, and a computing device cluster are provided. In embodiments, dialing test information configured by a user is obtained, where the dialing test information includes an identifier of a source instance and an identifier of a destination instance, the source instance is run on a first platform, the destination instance is run on a second platform, and the first platform and the second platform belong to different vendors. A dialing test task is generated based on the dialing test information, where the dialing test task indicates the source instance to send dialing test data to the destination instance. The dialing test task is run, and dialing test result data is obtained from the first platform and the second platform. In this way, according to the technical solutions provided in embodiments of this application, a tenant can perform unified operation and maintenance on multiple platforms in a data center network. This facilitates operation and maintenance on the multiple platforms in the data center network by the tenant, and improves tenant experience.

## Description

This application claims priority to Chinese Patent Application No. 202310166595.7, filed with the China National Intellectual Property Administration on February 24, 2023 and entitled "DIALING TEST METHOD, APPARATUS, AND SYSTEM, AND COMPUTING DEVICE CLUSTER", which is incorporated herein by reference in its entirety.

### TECHNICAL FIELD

This application relates to the field of cloud computing technologies, and in particular, to a dialing test method, apparatus, and system, and a computing device cluster.

### BACKGROUND

With popularization of cloud computing and expansion of data center networks, one tenant may rent resources of multiple cloud computing data centers for different computing purposes. In other words, a data center network of one tenant may include cloud resources provided by multiple cloud providers.

Currently, a cloud provider can deliver measurement instructions via a cloud management platform constructed by the cloud provider, to monitor traffic between cloud platforms provided by the cloud provider. However, this cannot be compatible with monitoring traffic between cloud platforms provided by other cloud providers or non-cloud networks, resulting in low flexibility and poor tenant experience.

### SUMMARY

Embodiments of this application provide a dialing test method, apparatus, and system, and a computing device cluster, allowing a tenant to monitor traffic between cloud platforms provided by different cloud providers and traffic between a cloud platform and a non-cloud network, and further monitor connectivity between nodes in a data center network owned by the tenant. This improves flexibility of monitoring traffic in the data center network of the tenant and improves tenant experience.

According to a first aspect, an embodiment of this application provides a dialing test method, applied to a control platform. The method includes:
obtaining dialing test information configured by a user, where the dialing test information includes an identifier of a source instance and an identifier of a destination instance, the source instance is run on a first platform, the destination instance is run on a second platform, and the first platform and the second platform belong to different vendors;
generating a dialing test task based on the dialing test information, where the dialing test task indicates the source instance to send dialing test data to the destination instance; and
running the dialing test task, and obtaining dialing test result data from the first platform and the second platform.

Here, the user is a tenant who leases a cloud resource from a cloud provider.

In some embodiments, at least one of the first platform and the second platform is a cloud platform.

In this embodiment of this application, the user can configure the dialing test information through the control platform, where the dialing test information includes a source instance and a destination instance of dialing test, and the dialing test task is generated based on the dialing test information configured by the user. The dialing test task is run. The source instance sends dialing test data to the destination instance to perform a dialing test on two instances on different platforms. In a dialing test process, information generated by the dialing test data from the source instance to the destination instance can be collected to monitor connectivity between the source instance and the destination instance. In this way, the tenant can perform unified operation and maintenance on multiple platforms in a data center network. This facilitates operation and maintenance on the multiple platforms in the data center network by the tenant, and improves tenant experience.

In a possible implementation, the first platform and/or the second platform are/is private cloud platforms/a private cloud platform.

In this way, the user can perform unified management on the multiple platforms in the data center network of the user based on an administrator account of a private cloud, for example, perform unified operation and maintenance on the multiple platforms. This facilitates operation and maintenance on the multiple platforms in the data center network by the tenant.

In a possible implementation, the method further includes:
receiving a first input of the user; and
delivering, based on the first input, monitoring hooks to multiple platforms of the user, where the multiple platforms include the first platform and the second platform, for the monitoring hooks to monitor connectivity between instances on the multiple platforms.

In some examples, the monitoring hook may be a script or code.

In this way, the user can deploy the monitoring hooks on the multiple platforms through the control platform, to monitor connectivity between the instances on the multiple platforms, so as to implement unified operation and maintenance on the multiple platforms. This improves convenience of multi-platform operation and maintenance.

In a possible implementation, the first input carries identities, and delivering, based on the first input, the monitoring hooks to the multiple platforms of the user includes:
obtaining, from multiple preset monitoring hooks based on the identities, monitoring hooks corresponding to the identities; and
deliver the monitoring hooks to the multiple platforms.

In this way, the user can configure the multiple monitoring hooks in advance. Different monitoring hooks monitor traffic in different manners. Different monitoring hooks correspond to different identities. The control platform determines, from the multiple preset monitoring hooks based on an identity entered by the user, a monitoring hook required by the user. This facilitates unified operation and maintenance on the multiple platforms by the user and user experience.

In a possible implementation, the first input includes a monitoring policy indicative of a manner of monitoring data by the monitoring hook.

Delivering, based on the first input, the monitoring hooks to the multiple platforms of the user includes:
delivering, according to the monitoring policy, the monitoring hooks to the multiple platforms of the user.

The monitoring policy includes at least performing traffic packet capture.

In this way, the user can configure the monitoring policy based on a requirement of the user, so that the control platform generates a monitoring hook that meets the requirement of the user. This facilitates unified operation and maintenance on the multiple platforms by the user and user experience.

In a possible implementation, the monitoring hook includes an identifier of the dialing test data, so that the monitoring hook monitors the dialing test data based on the data identifier.

In this way, the monitoring hook can monitor the dialing test data based on the data identifier, to monitoring connectivity between two instances, and implement unified operation and maintenance on the multiple platforms.

In a possible implementation, the method further includes:
summarizing the dialing test result data, to obtain address information of an instance on a traffic path between the instances and fault information of the instance.

In this way, the user can determine, based on summarized dialing test result data, whether an instance is faulty between two instances, and perform operation and maintenance on a faulty platform.

In a possible implementation, the method further includes:
displaying the address information and the fault information of the instance, to perform operation and maintenance on the instance based on the address information and the fault information of the instance.

In this way, the user can intuitively locate the faulty instance, to perform unified operation and maintenance on the multiple platforms. This facilitates operation and maintenance on a data center network by the user.

In a possible implementation, the dialing test information further includes the identifier of the dialing test data, and obtaining the dialing test result data from the first platform and the second platform includes:
obtaining, from the first platform and the second platform, data that carries the identifier, and generating the dialing test result data.

In this way, the control platform can monitor a path of the dialing test data from the source instance to the destination instance, to monitor connectivity between the source instance and the destination instance.

According to a second aspect, an embodiment of this application provides a dialing test apparatus, used in a control platform. The apparatus includes:
an obtaining module, configured to obtain dialing test information configured by a user, where the dialing test information includes an identifier of a source instance and an identifier of a destination instance, the source instance is run on a first platform, the destination instance is run on a second platform, and the first platform and the second platform belong to different vendors;
a generation module, configured to generate a dialing test task based on the dialing test information, where the dialing test task indicates the source instance to send dialing test data to the destination instance; and
a running module, configured to: run the dialing test task, and obtain dialing test result data from the first platform and the second platform.

Here, the user is a tenant who leases a cloud resource from a cloud provider.

In some embodiments, at least one of the first platform and the second platform is a cloud platform.

In this embodiment of this application, the user can configure the dialing test information through the control platform, where the dialing test information includes a source instance and a destination instance of dialing test, and the dialing test task is generated based on the dialing test information configured by the user. The dialing test task is run. The source instance sends dialing test data to the destination instance to perform a dialing test on two instances on different platforms. In a dialing test process, information generated by the dialing test data from the source instance to the destination instance can be collected to monitor connectivity between the source instance and the destination instance. In this way, the tenant can perform unified operation and maintenance on multiple platforms in a data center network. This facilitates operation and maintenance on the multiple platforms in the data center network by the tenant, and improves tenant experience.

In a possible implementation, the first platform and/or the second platform are/is private cloud platforms/a private cloud platform.

In this way, the user can perform unified management on the multiple platforms in the data center network of the user based on an administrator account of a private cloud, for example, perform unified operation and maintenance on the multiple platforms. This facilitates operation and maintenance on the multiple platforms in the data center network by the tenant.

In a possible implementation, the apparatus further includes:
a receiving module, configured to receive a first input of the user; and
a deployment module, configured to deliver, based on the first input, monitoring hooks to multiple platforms of the user, where the multiple platforms include the first platform and the second platform, for the monitoring hooks to perform traffic monitoring on the multiple platforms.

In some examples, the monitoring hook may be a script or code.

In this way, the user can deploy the monitoring hooks on the multiple platforms through the control platform, to monitor connectivity between the instances on the multiple platforms, so as to implement unified operation and maintenance on the multiple platforms. This improves convenience of multi-platform operation and maintenance.

In a possible implementation, the first input carries identities, and the deployment module is configured to:
obtain, from multiple preset monitoring hooks based on the identities, monitoring hooks corresponding to the identities; and
deliver the monitoring hooks to the multiple platforms.

In this way, the user can configure the multiple monitoring hooks in advance. Different monitoring hooks monitor traffic in different manners. Different monitoring hooks correspond to different identities. The control platform determines, from the multiple preset monitoring hooks based on an identity entered by the user, a monitoring hook required by the user. This facilitates unified operation and maintenance on the multiple platforms by the user and user experience.

In a possible implementation, the first input includes a monitoring policy indicative of a manner of monitoring data by the monitoring hook.

The deployment module is configured to deliver the monitoring hooks to the multiple platforms of the user according to the monitoring policy.

The monitoring policy includes at least performing traffic packet capture.

In this way, the user can configure the monitoring policy based on a requirement of the user, so that the control platform generates a monitoring hook that meets the requirement of the user. This facilitates unified operation and maintenance on the multiple platforms by the user and user experience.

In a possible implementation, the monitoring hook includes an identifier of the dialing test data, so that the monitoring hook monitors the dialing test data based on the data identifier.

In this way, the monitoring hook can monitor the dialing test data based on the data identifier, to monitoring connectivity between two instances, and implement unified operation and maintenance on the multiple platforms.

In a possible implementation, the apparatus further includes:
an analysis module, configured to summarize the dialing test result data, to obtain address information of an instance on a traffic path between the instances and fault information of the instance.

In this way, the user can determine, based on summarized dialing test result data, whether an instance is faulty between two instances, and perform operation and maintenance on a faulty platform.

In a possible implementation, the apparatus further includes:
a display module, configured to display the address information and the fault information of the instance, so as to perform operation and maintenance on the instance based on the address information and the fault information of the instance.

In this way, the user can intuitively locate the faulty instance, to perform unified operation and maintenance on the multiple platforms. This facilitates operation and maintenance on a data center network by the user.

In a possible implementation, the dialing test information further includes the identifier of the dialing test data, and the running module is configured to: obtain, from the first platform and the second platform, data that carries the identifier, and generate the dialing test result data.

In this way, the control platform can monitor a path of the dialing test data from the source instance to the destination instance, to monitor connectivity between the source instance and the destination instance.

According to a third aspect, an embodiment of this application provides a dialing test system. The system includes a control platform, a first platform, and a second platform.

The control platform is configured to perform the method according to any one of the first aspect or the possible implementations of the first aspect, to monitor traffic between the first platform and the second platform.

According to a fourth aspect, an embodiment of this application provides a computing device cluster, including at least one computing device. Each computing device includes a processor and a memory.

A processor of the at least one computing device is configured to execute instructions stored in a memory of the at least one computing device, to cause the computing device cluster to perform the method according to any one of the first aspect or the possible implementations of the first aspect.

According to a fifth aspect, an embodiment of this application provides a dialing test apparatus. The apparatus runs a computer program instruction, to perform the method according to any one of the first aspect or the possible implementations of the first aspect. For example, the apparatus may be a chip or a processor.

In an example, the apparatus may include a processor. The processor may be coupled to a memory, read instructions in the memory, and perform, based on the instructions, the method according to any one of the first aspect or the possible implementations of the first aspect. The memory may be integrated into a chip or a processor, or may be independent of the chip or the processor.

According to a sixth aspect, an embodiment of this application provides a computer storage medium. The computer storage medium stores instructions, and when the instructions are run on a computer, the computer is caused to perform the method according to any one of the first aspect or the possible implementations of the first aspect.

According to a seventh aspect, an embodiment of this application provides a computer program product including instructions. When the instructions are run on a computer, the computer is caused to perform the method according to any one of the first aspect or the possible implementations of the first aspect.

### BRIEF DESCRIPTION OF DRAWINGS

FIG. 1 is a diagram of a system architecture of a cloud computing data center according to an embodiment of this application;
FIG. 2 is a diagram of a system architecture of a data center network according to an embodiment of this application;
FIG. 3 is a diagram of a system architecture of a dialing test system according to an embodiment of this application;
FIG. 4 is a schematic flowchart of a dialing test method according to an embodiment of this application;
FIG. 5a-1 to FIG. 5a-3 are an example diagram of a structure of a dialing test system according to an embodiment of this application;
FIG. 5b-1 to FIG. 5b-3 are an example diagram of a structure of a dialing test system according to an embodiment of this application;

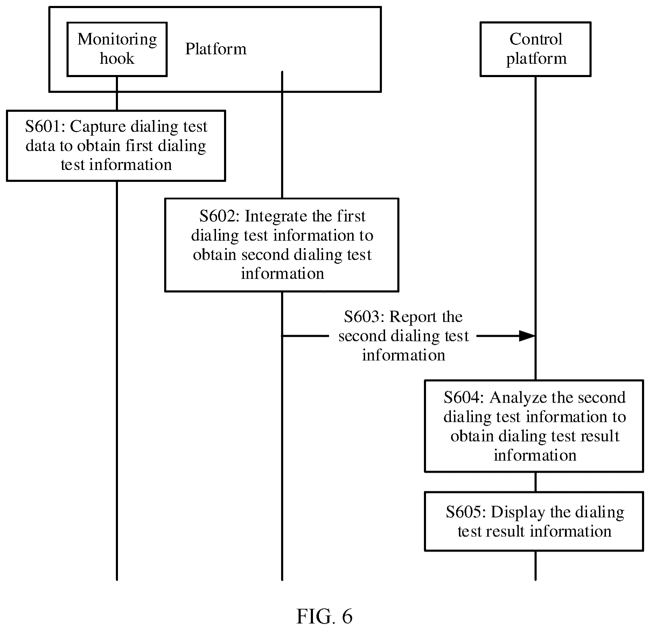

FIG. 6 is a schematic flowchart of a method for determining a fault of a path between instances according to an embodiment of this application;

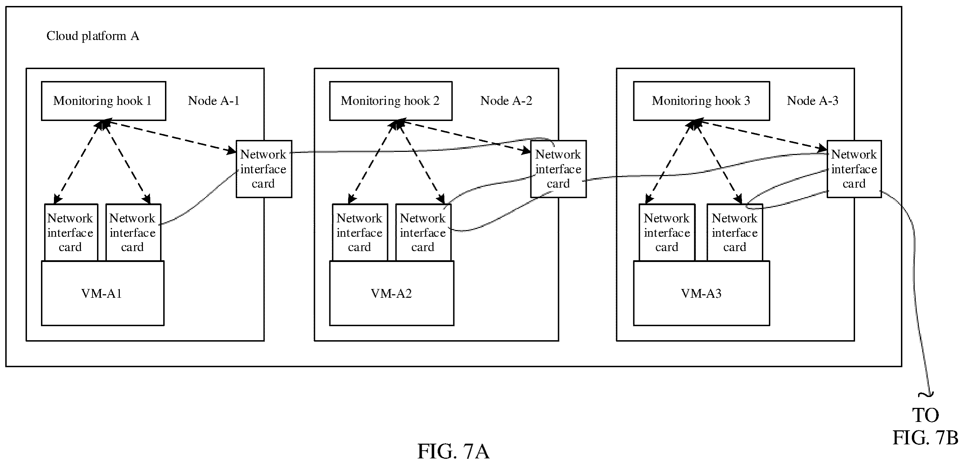

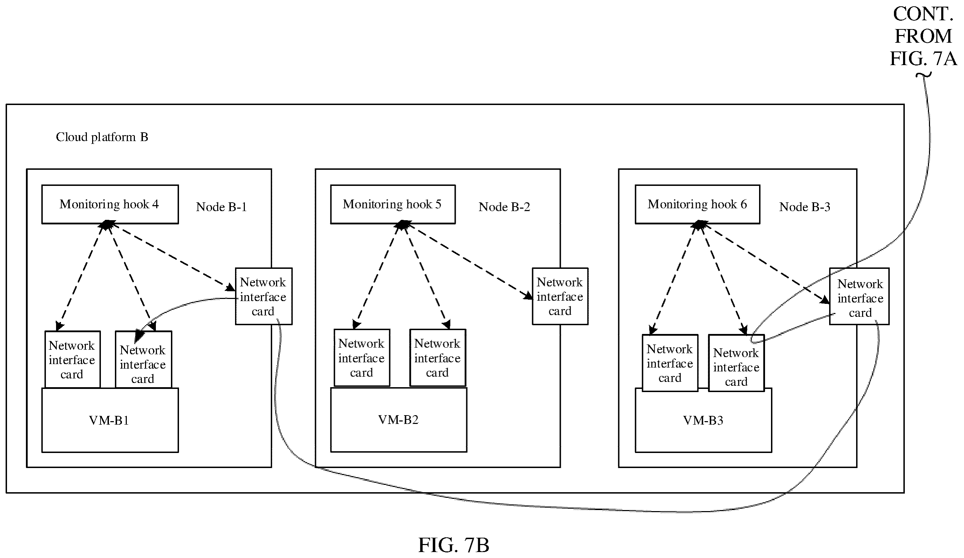

FIG. 7A and FIG. 7B are a diagram of a transmission path of dialing test data according to an embodiment of this application;

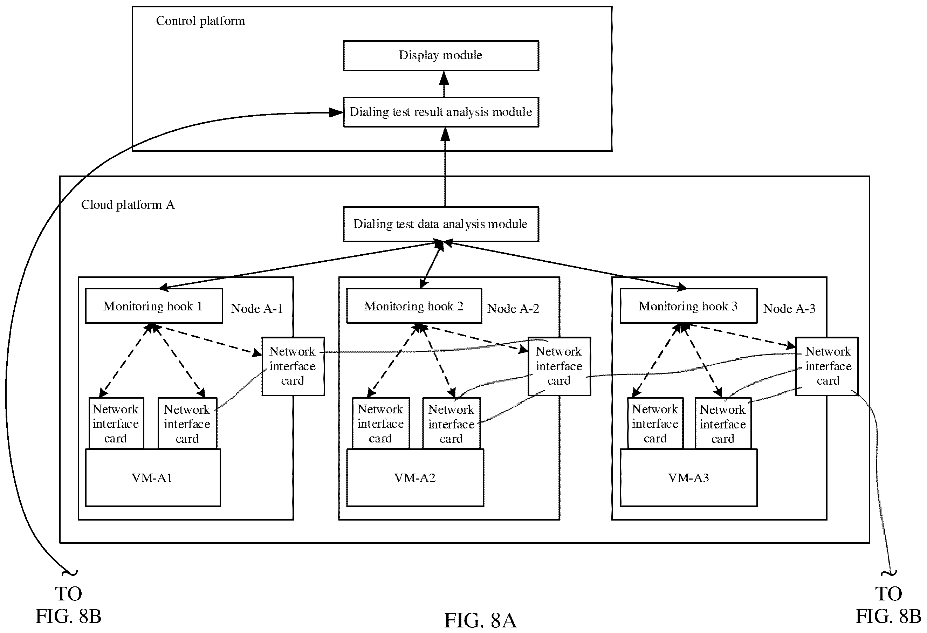

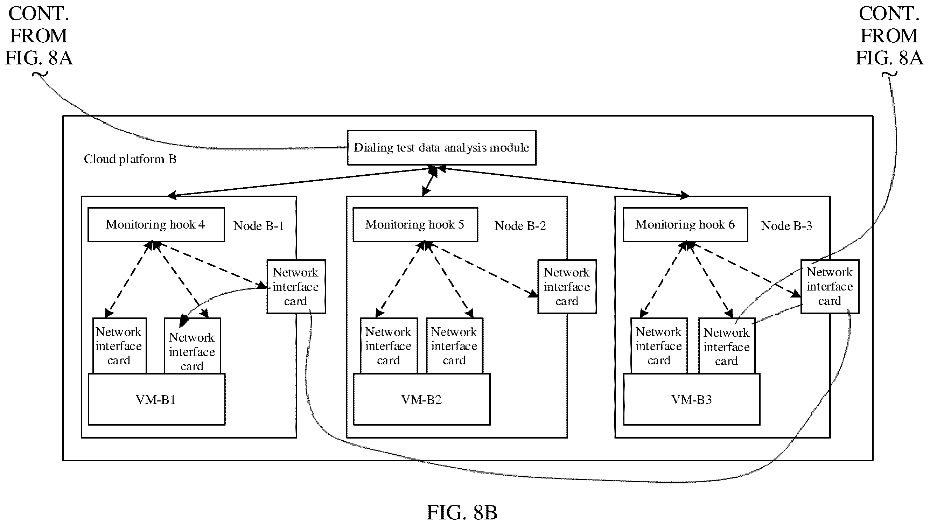

FIG. 8A and FIG. 8B are a diagram of performing a dialing test method by a dialing test system according to an embodiment of this application;

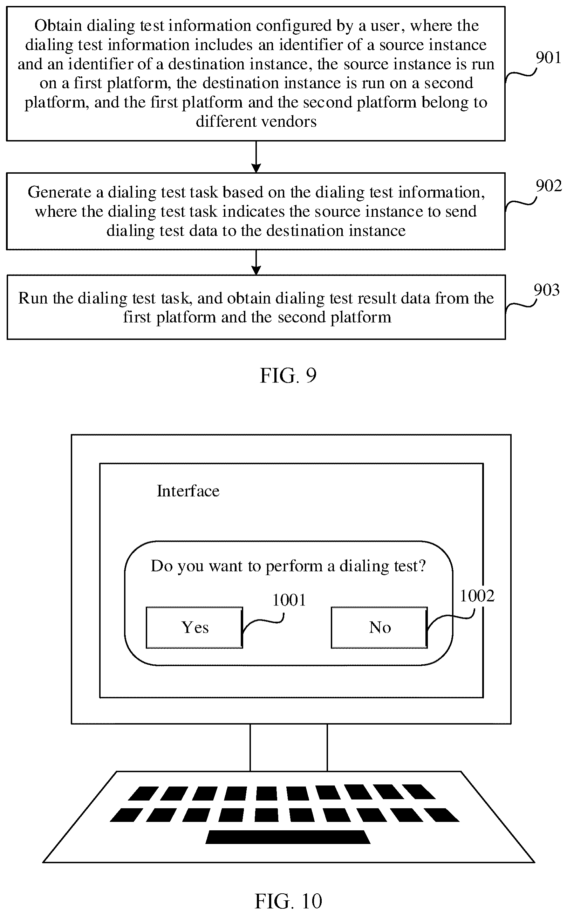

FIG. 9 is a schematic flowchart of another dialing test method according to an embodiment of this application;
FIG. 10 is a diagram of an interface according to an embodiment of this application;

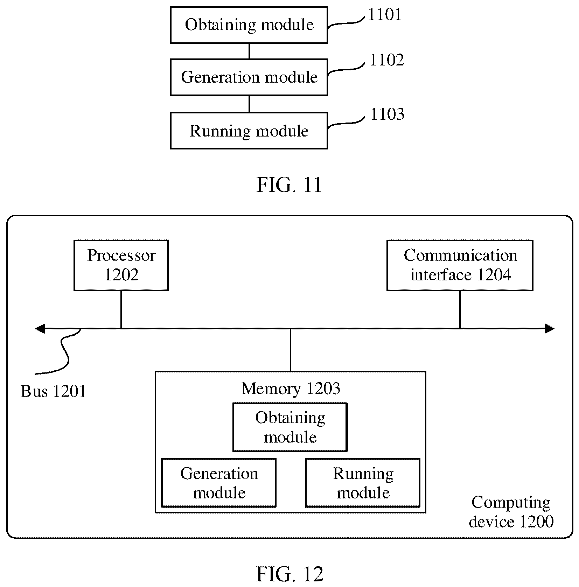

FIG. 11 is a diagram of a structure of a dialing test apparatus according to an embodiment of this application;
FIG. 12 is a diagram of a structure of a computing device according to an embodiment of this application;

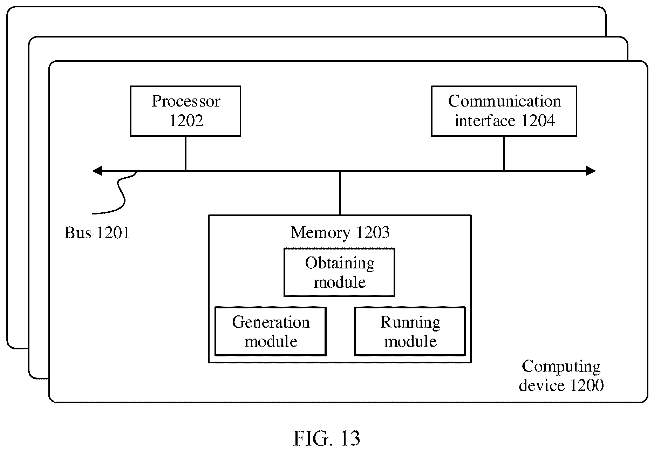

FIG. 13 is a diagram of a structure of a computing device cluster according to an embodiment of this application; and

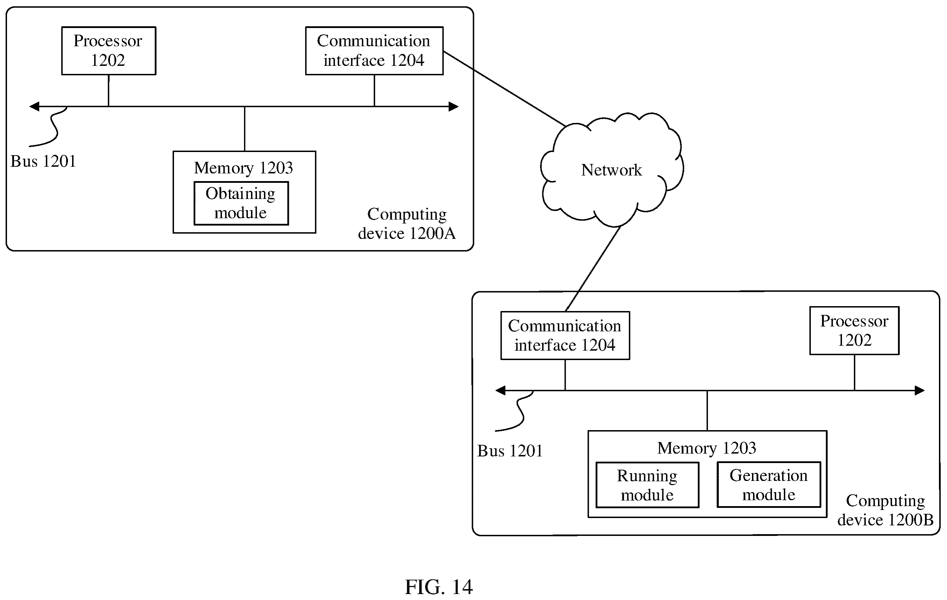

FIG. 14 is a diagram of a structure of another computing device cluster according to an embodiment of this application.

### DESCRIPTION OF EMBODIMENTS

To make objectives, technical solutions, and advantages of embodiments of this application clearer, the following describes the technical solutions in embodiments of this application with reference to accompanying drawings.

In descriptions of embodiments of this application, the term "example", "for example", "in an example", or the like is used to represent giving an example, an illustration, or a description. Any embodiment or design solution described as "exemplary", "for example", or "for example" in embodiments of this application should not be interpreted as being more preferred or advantageous than another embodiment or design solution. Specifically, the use of the words such as "exemplary", "for example", or "for example" is intended to present related concepts in a specific manner.

In descriptions of embodiments of this application, the term "and/or" is merely an association relationship for describing associated objects, and indicates that three relationships may exist. For example, A and/or B may indicate: only A exists, only B exists, and both A and B exist. In addition, unless otherwise specified, the term "multiple" means two or more. For example, multiple systems mean at least two systems, and multiple terminals means at least two terminals.

In addition, the terms "first" and "second" are merely used for a description purpose, and shall not be understood as indicating or implying relative importance or implicitly including indicated technical features. Therefore, a feature limited by "first" or "second" may explicitly or implicitly include one or more such features. The terms "include", "contain", "have", and their variants all mean "include but are not limited to", unless otherwise specifically emphasized in another manner.

The following provides explanations and descriptions about some terms in embodiments. It should be noted that these explanations are for ease of understanding by persons skilled in the art, and are not intended to limit the protection scope claimed by the present invention.

Cloud user: The cloud user is an organization (for example, an operator, an enterprise, or an institution) or an individual. The cloud user and a provider of a cloud platform agree to use Internet technology (Internet Technology, IT) resources available on the cloud platform, and the cloud user is also referred to as a tenant.

Cloud network: The cloud network is a cloud-centric virtualized network infrastructure for a cloud user.

Connectivity: Regardless of how many nodes are between two nodes, if traffic can arrive at one node from the other node, it indicates that connectivity exists between the two nodes.

Cloud provider: The cloud provider is an organization owning IT resources, which can be leased to tenants.

Reachability: Reachability indicates connectivity of traffic from one node to another node.

Dialing test data: The dialing test data is data constructed when a dialing test task is executed.

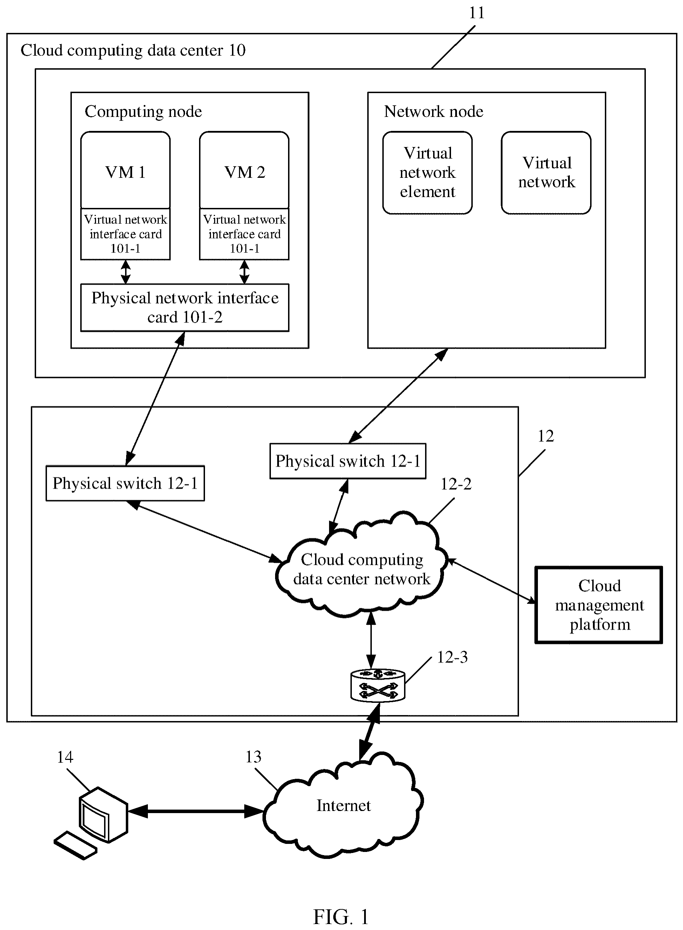

FIG. 1 is a diagram of a system architecture of a cloud computing data center according to an embodiment of this application. As shown in FIG. 1, a cloud computing data center 10 includes at least one computing device 11 and a cloud network device 12.

The computing device may be a device like a server. In some embodiments of this application, the server may be a hardware server, or may be a virtual server embedded in a virtualized environment. For example, the server in embodiments of this application may be a virtual machine (Virtual Machine, VM) executed on a hardware server including one or more other virtual machines.

As shown in FIG. 1, each computing device may include a computing node 101 and/or a network node 102. In some embodiments, one computing device includes a computing node, and another computing device includes a network node. In some other embodiments, the computing device includes both a computing node and a network node.

The computing node is a core of the cloud computing data center and provides computing and memory resources and the like for running an instance. The computing node includes at least one instance. The instance is, for example, a virtual machine. In another scenario, the instance is a container, a bare metal server, or the like. For example, as shown in FIG. 1, the computing node includes a VM 1 and a VM 2. The computing node further includes a network interface card. The network interface card includes a virtual network interface card 101-1 and a physical network interface card 101-2. The computing node communicates with the network node in the cloud computing data center through the physical network interface card. The virtual network interface card corresponds to the virtual machine, and the virtual machine communicates with each module in the computing node through the virtual network interface card.

The network node is used to provide a network resource for running an instance. In some embodiments, the network node may include at least one network element, for example, a switch. Herein, the network element may be a physical network element, for example, a physical switch, or may be a virtual network element embedded in the virtualized environment, for example, a virtual switch. The network node is used to implement communication between different computing nodes.

The cloud network device is used to communicate with an Internet 13, so that a tenant can access the cloud computing data center through the Internet through a client 14. For example, as shown in FIG. 1, the cloud network device may include a physical switch 12-1, a cloud computing data center 12-2, and a router 12-3.

In some embodiments, the cloud computing data center further includes nodes such as a storage node and a cloud management platform. The storage node may be a node used to provide a storage resource. The cloud management platform is used to provide an access interface (for example, an interface or an API). The tenant can operate a client to remotely access the access interface to register a cloud account and a password on the cloud management platform and log in to the cloud management platform. After the cloud account and the password are successfully authenticated by the cloud management platform, the tenant can further pay for selecting and purchasing a virtual machine of a specific specification (processor, memory, or disk) on the cloud management platform. After the purchasing with payment succeeds, the cloud management platform provides a remote login account and password of the purchased virtual machine, and the client can remotely log in to the virtual machine, and install and run an application of the tenant on the virtual machine.

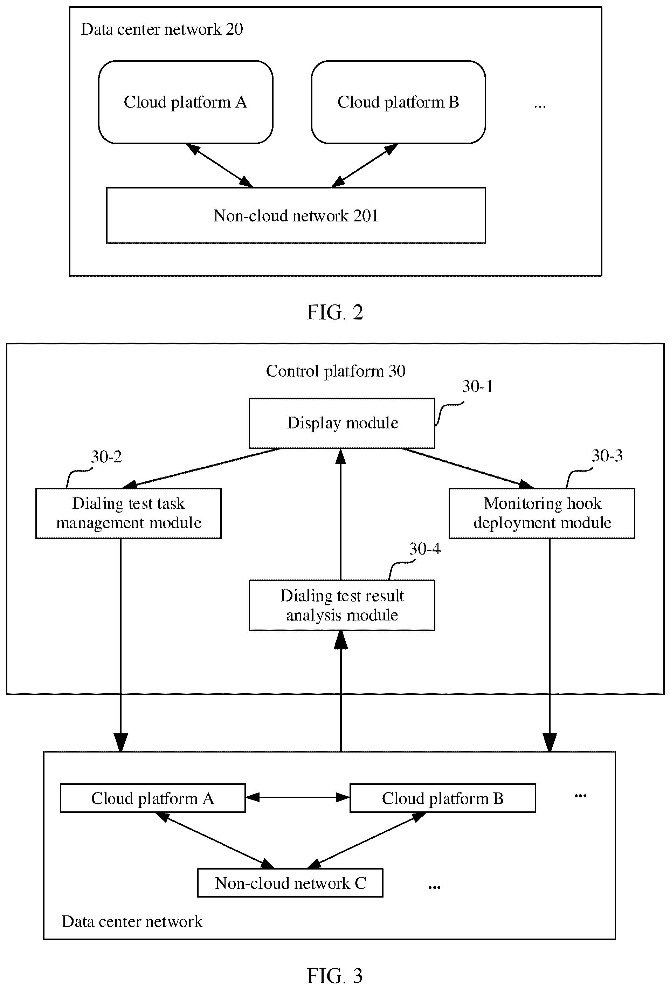

With popularization of cloud computing and expansion of data center networks, one tenant may rent resources of multiple cloud computing data centers, to achieve different computing purposes. Herein, all cloud platforms in the data center network are private clouds of the tenant. As shown in FIG. 2, a data center network 20 of a tenant may be a system including multiple cloud platforms such as a cloud platform A and a cloud platform B and a non-cloud network 201. Nodes on the multiple cloud platforms can communicate with each other through a network. Currently, monitoring connectivity between the multiple cloud platforms and an instance in the non-cloud network is a key field of network operation and maintenance performed by the tenant. However, the data center network of the tenant includes the multiple cloud platforms and the non-cloud network. Consequently, in a dialing test solution used in a related technology, operations such as delivering a measurement instruction and collecting measurement information through a management and control plane of a cloud platform is incompatible with connectivity between another cloud platform of the tenant and an instance in the non-cloud network. As a result, the tenant cannot perform unified operation and maintenance on the data center network of the tenant, flexibility of performing operation and maintenance on the data center network by the tenant is low, and tenant experience is poor.

Based on this, an embodiment of this application provides a dialing test method. On a basis of a control platform on a tenant side, a tenant can configure dialing test information, namely, a source instance and a destination instance of dialing test, through the control platform. The source instance and the destination instance are run on different platforms, and the platforms on which the source instance and the destination instance are located are provided by different vendors. In this way, the control platform can perform a dialing test on the source instance and the destination instance based on the dialing test information, to obtain information generated based on dialing test data from the source instance to the destination instance in a dialing test process, and monitor connectivity between the source instance and the destination instance based on the information. In this way, the tenant can perform unified operation and maintenance on multiple platforms in a data center network. This facilitates operation and maintenance on the multiple platforms in the data center network by the tenant, and improves tenant experience.

The following describes a dialing test system to which the dialing test method provided in embodiments of the present invention may be applied. FIG. 3 is a diagram of an architecture of a dialing test system according to an embodiment of this application. As shown in FIG. 3, the dialing test system provided in this embodiment of this application includes a cloud platform A, a cloud platform B, a non-cloud network C, another platform, and the like.

The cloud platform A, the cloud platform B, and the non-cloud network C are all components of a data center network of a same tenant. The cloud platform A and the cloud platform B are cloud computing data centers provided by different cloud providers, for example, cloud computing data centers provided by different enterprises. For specific architectures of the cloud platform A and the cloud platform B, refer to the descriptions of the data center network in FIG. 1. Details are not described herein again.

To perform unified network operation and maintenance on the cloud platform A, the cloud platform B, and the non-cloud network, so as to monitor connectivity between two instances, the dialing test system provided in this embodiment of this application further includes a control platform 30.

As shown in FIG. 3, the control platform includes a display module 30-1, a dialing test task management module 30-2, a monitoring hook deployment module 30-3, and a dialing test result analysis module 30-4.

The display module is configured to display, to the tenant, path information of dialing test data between two instances and connectivity between two nodes. In some embodiments, the tenant can orchestrate a monitoring hook with the display module, and configure a monitoring policy, for example, a packet capture node, of the monitoring hook with the display module. Herein, the two nodes may be nodes belonging to a same cloud platform, or the two nodes may be nodes belonging to different cloud platforms, or the two nodes are respectively a node belonging to a cloud platform and a node belonging to the non-cloud network.

In some embodiments, the display module may be a terminal having a display, for example, a computer or a mobile phone. A client is installed on the terminal, and a tenant of the tenant can invoke an interface through the client, to access modules on the control platform, for example, the monitoring hook deployment module and the dialing test result analysis module.

In this embodiment, in a possible implementation, the dialing test task management module, the monitoring hook deployment module, and the dialing test result analysis module on the control platform may be deployed on a cloud platform, for example, deployed on the cloud platform B. The display module is deployed in a terminal that can communicate with the cloud platform. In another possible implementation, the control platform is deployed in a terminal. Herein, in addition to the foregoing manner of deploying the control platform, another possible manner of deploying the control platform may be further included. This is not specifically limited in embodiments of this application.

The monitoring hook deployment module is configured to deliver a monitoring hook to a node on the cloud platform or the non-cloud network, to deploy the monitoring hook on the node on the cloud platform or the non-cloud network.

The dialing test task management module is configured to: formulate a dialing test task, and deliver the dialing test task to the dialing test task management module deployed on the cloud platform or the non-cloud network.

The dialing test result analysis module is configured to: receive dialing test path information reported by the cloud platform or the non-cloud network, integrate dialing test path information on each cloud platform or the non-cloud network, generate complete traffic path information in a cross-cloud or non-cloud environment, analyze the traffic path information, and provide demarcation and location information for fault information.

It should be noted that, the dialing test task management module 30-2, the monitoring hook deployment module 30-3, and the dialing test result analysis module 30-4 on the control platform may be deployed on a node, or may be deployed on an instance in a node. In some embodiments, the dialing test task management module 30-2, the monitoring hook deployment module 30-3, and the dialing test result analysis module 30-4 on the control platform may be process-level services.

In some embodiments, to make the control platform to perform unified monitoring on connectivity between instances on the cloud platform and the non-cloud network, the cloud platform and the non-cloud network each include a monitoring hook management module and a dialing test data analysis module. The monitoring hook management module is configured to: receive the monitoring hook delivered by the control platform, and deploy the corresponding monitoring hook on the node on the cloud platform or the non-cloud network. In addition, the monitoring hook management module is further configured to: receive the dialing test task delivered by the control platform, and deliver the dialing test task to a monitoring hook deployed on a node on a traffic path. Here, the traffic path is a path formed by an instance through which traffic needs to pass from one instance to another instance.

The dialing test data analysis module is configured to: collect and obtain information generated when dialing test data captured by the monitoring hook passes through an instance, aggregate information on the platform, and report aggregated information to the control platform, that is, report dialing test result data.

The monitoring hook is used to construct dialing test data based on a dialing test task. The dialing test data is injected from a source instance, passes through an instance, and arrives at a destination instance. A monitoring hook is deployed on each node on the traffic path, and the monitoring hook can monitor dialing test data that passes through the node.

In some embodiments, the dialing test data includes multiple packets. Whether a packet loss occurs on a node is determined based on a quantity of dialing test data that passes through the node and a quantity of dialing test data that is actually constructed.

In this embodiment of this application, the monitoring hook may further monitor a physical switch on the platform. Specifically, a function of the physical switch may be implemented by enabling an encapsulated remote switch port analyzer (Encapsulated Remote Switch Port Analyzer, ERSPAN) function of the physical switch.

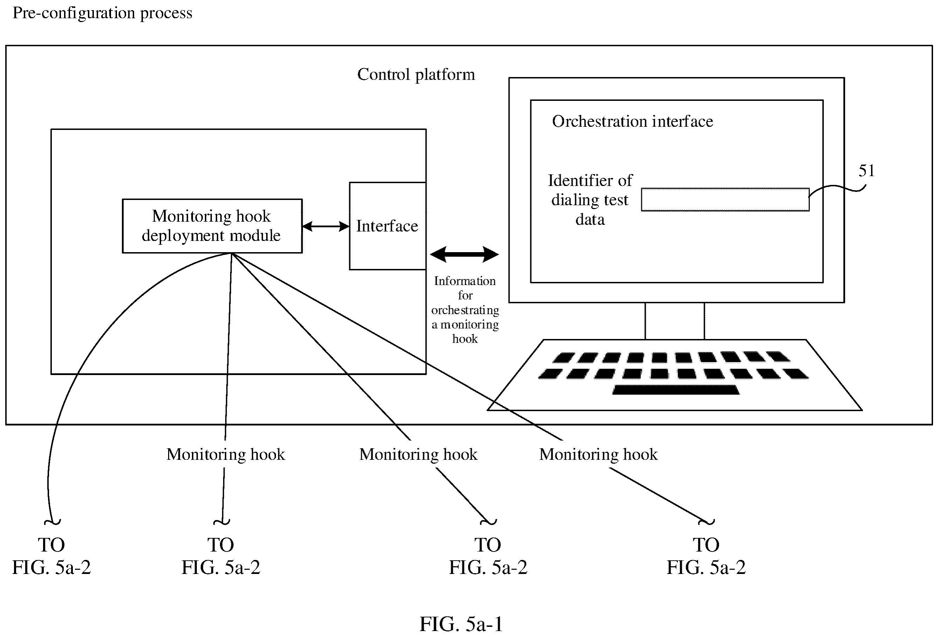

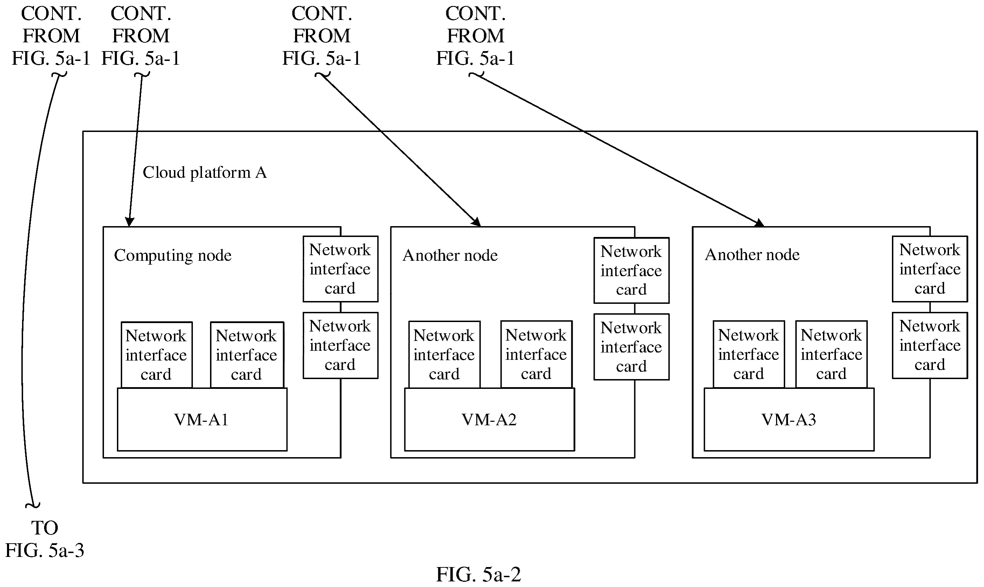

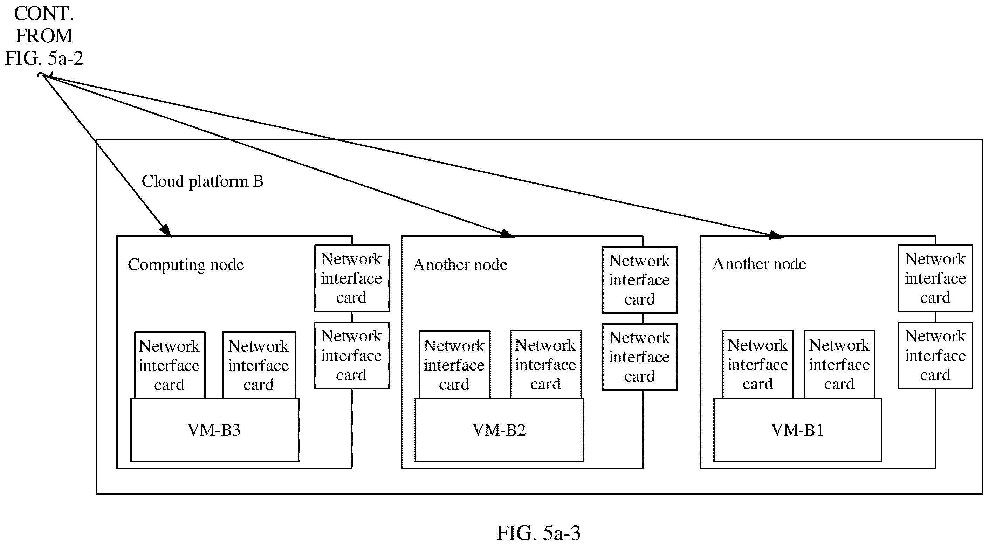

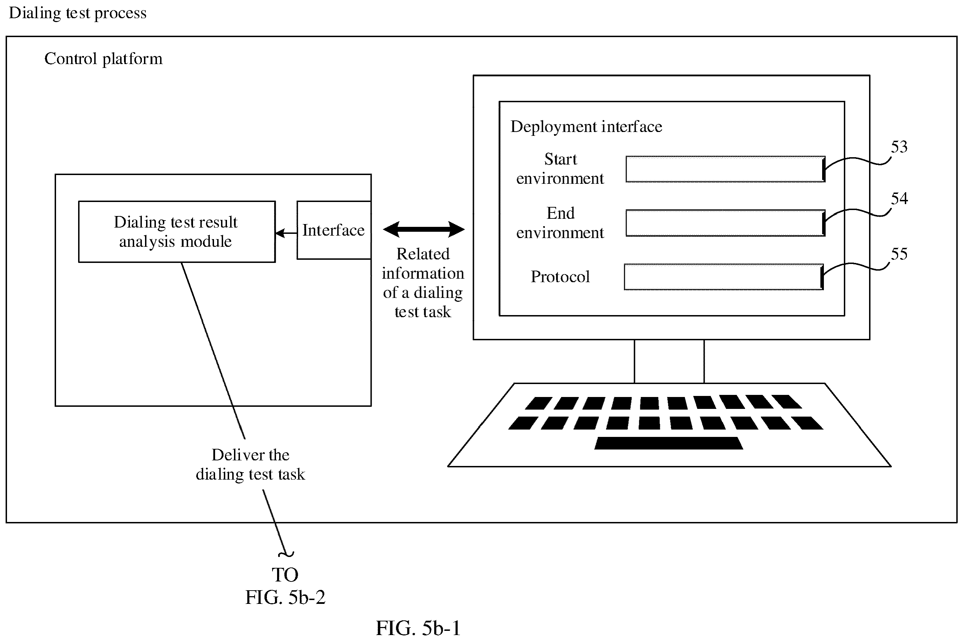

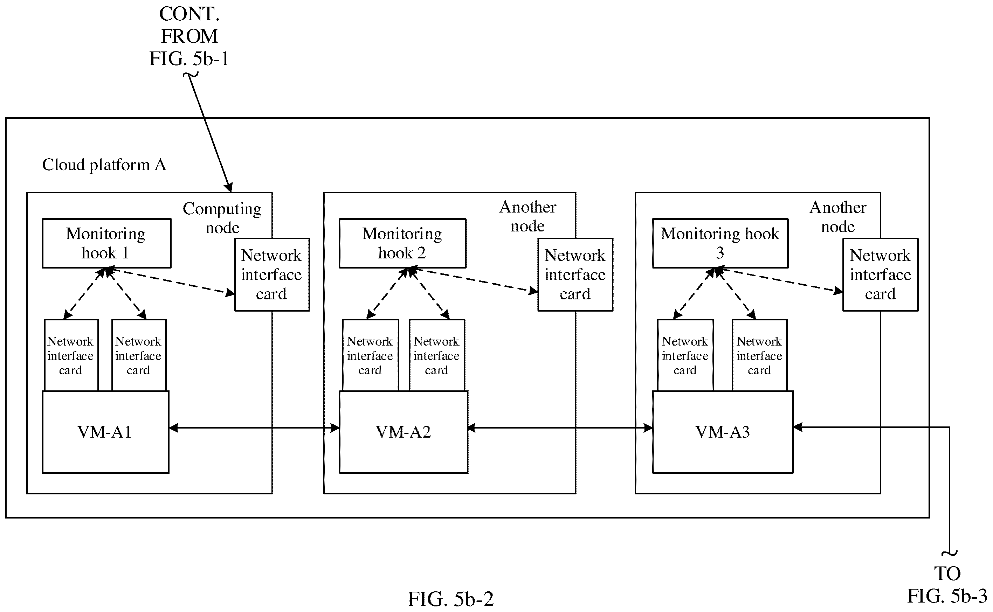

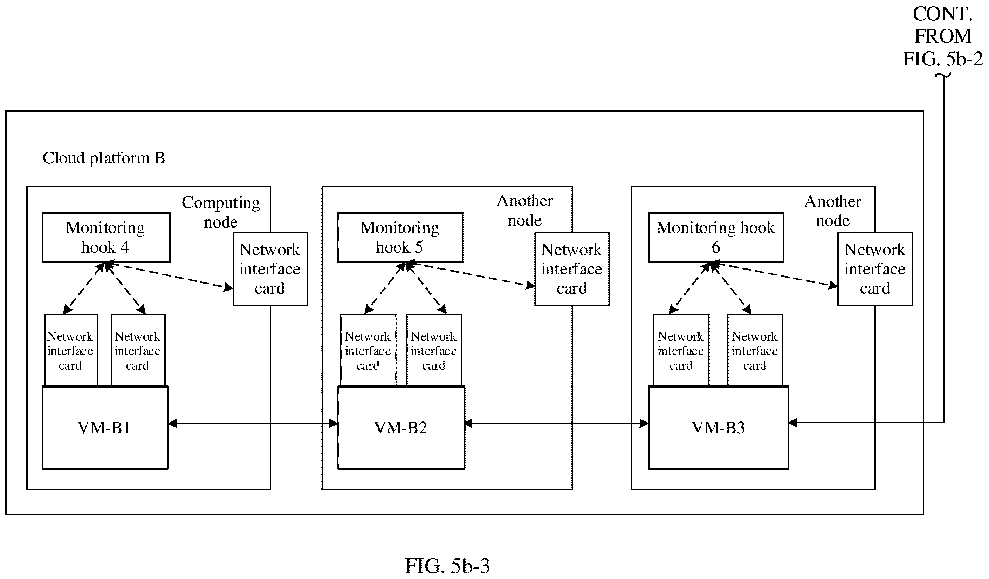

The foregoing provides a brief overview of the dialing test system between instances on multiple platforms provided in embodiments of this application. Next, connectivity between a VM-A1 on the cloud platform A and a VM-B1 on the cloud platform B in FIG. 3 is used as an example to describe in detail, with reference to FIG. 5a-1 to FIG. 5b-3, a dialing test method performed by the dialing test system provided in embodiments of this application.

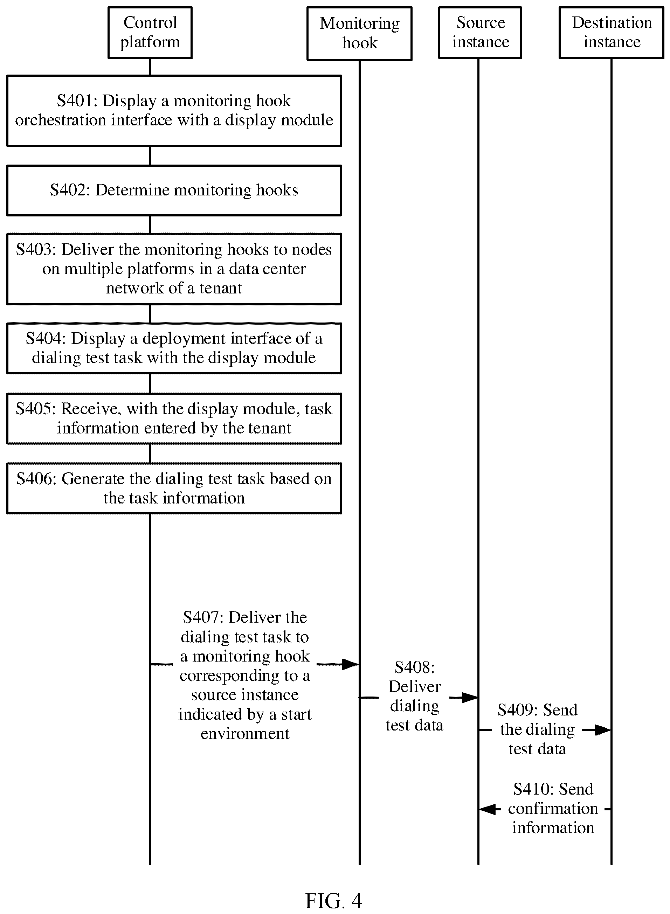

FIG. 4 is a schematic flowchart of a dialing test method according to an embodiment of this application. As shown in FIG. 4, the dialing test method provided in this embodiment of this application includes the following steps S401 to S410.

S401: A control platform displays a monitoring hook orchestration interface with a display module.

A tenant can perform an operation on the display module, to invoke an interface provided by the control platform, for the display module to display the monitoring hook orchestration interface. The monitoring hook indicates data that needs to be monitored. In this embodiment of this application, the data that needs to be monitored by the monitoring hook is dialing test data.

In some embodiments, the monitoring hook may be considered as a policy for monitoring dialing test data. In a policy running process, operations need to be performed, for example, packet capture on dialing test data, packet capture on information that needs to be obtained, and obtaining a flow direction of information,.

In a possible implementation, the monitoring hook may be a code, or may be a script. For example, in a code running process, packet capture can be performed on dialing test data that passes through an instance, to obtain information (for example, an identifier of a node on which the instance is located and an identifier of a port on which packet capture is performed), and send the obtained information to the control platform.

S402: The control platform determines a monitoring hook.

The monitoring hook may be a monitoring hook selected or orchestrated by the tenant based on a requirement, so that dialing test data can be monitored, for example, packet capture is performed on the dialing test data.

In a possible implementation, multiple preset monitoring hooks are displayed on the monitoring hook orchestration interface, and the tenant selects, from the multiple preset monitoring hooks, the monitoring hook that meets the requirement.

In another possible implementation, the tenant may enter, on the orchestration interface based on the requirement of the tenant, information required for orchestrating the monitoring hook, and the control platform generates the monitoring hook based on the information entered by the tenant on the orchestration interface. Specifically, the tenant can enter, on the orchestration interface, an identifier of a node on which the monitoring hook needs to be deployed, a monitoring policy, and an identifier of to-be-monitored data. Here, the monitoring policy is a manner in which the monitoring hook monitors the dialing test data. For example, when the dialing test data passes through the instance, the monitoring hook performs packet capture on the dialing test data.

Herein, the identifier of the data may be an identity of the dialing test data, an identity of the dialing test task, a name of the dialing test task, or the like.

On the orchestration interface shown in FIG. 5a-1 to FIG. 5a-3, the tenant enters an identifier of the dialing test data through an identifier control 51. Here, the monitoring hook can monitor, based on the identifier, whether the data that passes through the instance is the dialing test data.

S403: The control platform delivers monitoring hooks to nodes on multiple platforms in a data center network of the tenant.

In a possible implementation, monitoring hooks may be deployed on instances on nodes on all platforms in the data center network of the tenant. For example, as shown in FIG. 5a-1 to FIG. 5a-3, the control platform delivers the monitoring hooks to all virtual machines on the cloud platform A and the cloud platform B, namely, the VM-A1, a VM-A2, a VM-A3, the VM-B1, a VM-B2, and a VM-B3.

The monitoring hook is deployed on each node to monitor dialing test data that passes through the node, to obtain information generated when the dialing test data passes through the node, for example, an identifier of an instance through which the dialing test data passes. The control platform can collect information obtained by the monitoring hooks, and analyze information from different platforms to determine connectivity between instances.

In a possible implementation, the monitoring hook can capture dialing test data from a network interface card on an instance and a network interface card on a node. For example, as shown in FIG. 5b-1 to FIG. 5b-3, a monitoring hook 1 can capture dialing test data from a network interface card on the VM-A1 and a network interface card on a computing node.

The foregoing S401 to S403 are a preset process, and the monitoring hooks need to be deployed on the nodes on the multiple platforms. In this way, the control platform can monitor, based on the monitoring hooks, the dialing test data in an execution process of the dialing test task. The following describes in detail the execution process of the dialing test task.

S404: The control platform displays a deployment interface of the dialing test task with the display module.

The tenant can construct the dialing test task with the display module. The dialing test task indicates a start environment and an end environment of the dialing test data, for example, an instance used as a start point of the dialing test data and an instance used as an end point of the dialing test data.

The deployment interface of the dialing test task is used to display, to the tenant, information that needs to be entered for constructing the dialing test task, for example, the start environment and end environment of the dialing test data. The tenant enters, based on an instance on which dialing test needs to be performed, information such as an identifier of the instance, for example, information such as a source IP address, a destination IP address, a source port, a destination port, and a communication protocol.

For example, as shown in FIG. 3, the tenant needs to measure connectivity between the VM-A1 on the cloud platform A and the VM-B1 on the cloud platform B. The VM-A1 on the cloud platform A is a source instance, and the VM-B1 on the cloud platform B is a destination instance. The tenant enters an IP address of the VM-A1 on the cloud platform A, an IP address of the VM-B1 on the cloud platform B, a port address of the VM-A1, a port address of the VM-B1, and a communication protocol between the VM-A1 and the VM-B1 through the deployment interface.

S405: The control platform receives, with the display module, task information entered by the tenant.

S406: The control platform generates the dialing test task based on the task information.

S407: The control platform delivers the dialing test task to a monitoring hook corresponding to a source instance indicated by the start environment.

The source instance is a start point of the dialing test task. The dialing test task includes related information of the task, such as the start environment and the end environment of the dialing test data, and such as the information like the source IP address, the destination IP address, the source port, the destination port, the communication protocol, and the network interface card capturing the dialing test data.

S408: The monitoring hook corresponding to the source instance delivers dialing test data to the source instance based on the dialing test task.

S409: The source instance sends the dialing test data to the destination instance.

S410: The destination instance sends acknowledgment information to the source instance based on the dialing test data.

The dialing test data may be traffic formed by at least one packet. Specifically, the monitoring hook generates the dialing test data based on the related information of the task in the dialing test task. To enable a monitoring hook on another platform to monitor the dialing test data, the dialing test data may be further colored, for example, the identifier that is of the dialing test data and that is carried in the monitoring hook is carried in the dialing test data. For example, the dialing test data carries the name of the dialing test task or the identity of the dialing test data.

As shown in FIG. 5b-1 to FIG. 5b-3, the tenant enters information about the start environment through a control 53, enters information about the end environment through a control 54, and enters a communication protocol between the start environment and the end environment through a control 55, for example, the IP address of the VM-A1, an address of the network interface card on the VM-A1, the IP address of the VM-B1, an address of a network interface card on the VM-B1, and the communication protocol between the VM-A1 and the VM-B1. The control platform generates the dialing test task. The dialing test task includes the IP address of the VM-A1, the address of the network interface card on the VM-A1, the IP address of the VM-B1, the address of the network interface card on the VM-B1, and the communication protocol between the VM-A1 and the VM-B1. The control platform delivers, based on the IP address of the VM-A1, the dialing test task to the monitoring hook 1 corresponding to the VM-A1.

The monitoring hook 1 constructs the dialing test data based on the information about the start environment and the information about the end environment in the dialing test task, colors the dialing test data, and uses the dialing test data to carry the identifier that is of the dialing test data and that is in the monitoring hook. The virtual machine VM-A1 sends the dialing test data. The dialing test data flows out from the virtual machine VM-A1 and arrives at the virtual machine VM-B1.

In some embodiments, to monitor whether a node is faulty, the dialing test data may be sent from the source instance to the destination instance by using multiple packets, to determine, based on a quantity of packets received by the node, whether a fault like a packet loss occurs on the node. For detailed descriptions, refer to the following descriptions of the embodiment corresponding to FIG. 6.

When the dialing test data is sent from the source instance to the destination instance by using the multiple packets, the monitoring hook can color each dialing test packet.

During transmission of the dialing test data, a monitoring hook on a node through which the dialing test data passes can monitor the dialing test data. The monitoring hook can obtain information and report the information to the control platform. The control platform can determine a fault on a path between instances based on the reported information. The following describes in detail a method for determining the fault of the path between the instances.

FIG. 6 is a schematic flowchart of a method for determining a fault of a path between instances according to an embodiment of this application. The method for determining a fault of a path between instances provided in this embodiment of this application can be applied to the dialing test system shown in FIG. 3. As shown in FIG. 6, the method for determining a fault of a path between instances provided in this embodiment of this application includes S601 to S605.

S601: A monitoring hook captures dialing test data, to obtain first dialing test information.

The first dialing test information indicates time at which the monitoring hook captures the dialing test data, a quantity of captured dialing test data, an identifier of an instance through which the dialing test data passes, and the like.

For example, as shown in FIG. 5b-1 to FIG. 5b-3, the dialing test data passes through a virtual machine VM-A2, an ID of a packet captured by a monitoring hook 2 is a packet 1, time at which the packet 1 is captured is 1657953711530, and a quantity of captured packets whose IDs are the packet 1 is 8. In this case, the first dialing test information is shown in Table 1.

**Table 1**

| Packet ID | VM-A2 (identifier of the instance) | |
|---|---|---|
| | Capture time | Quantity of packets |
| Packet 1 | 1657953711530 | 8 |

Only some of monitoring hooks on all nodes can capture dialing test data. For example, as shown in FIG. 7A and FIG. 7B, after flowing out from a virtual machine VM-A1, the dialing test data passes through the virtual machine VM-A2, a virtual machine VM-A3, and a virtual machine VM-B3, and arrives at a virtual machine VM-B1. A monitoring hook 1 to a monitoring hook 6 monitor data in real time. However, only monitoring hooks (namely, the monitoring hook 1 to the monitoring hook 3, the monitoring hook 4, and the monitoring hook 6) on nodes on which the virtual machine VM-A1 to the virtual machine VM-A3, the virtual machine VM-B3, and the virtual machine VM-B1 are located can capture dialing test data.

S602: A platform integrates the first dialing test information to obtain second dialing test information.

The platform includes multiple nodes, and the dialing test data may pass through at least one node on one platform. When the dialing test data passes through multiple nodes on one platform, there are multiple pieces of first dialing test information.

For example, as shown in FIG. 7A and FIG. 7B, the dialing test data passes through two nodes on a cloud platform B, namely, nodes on which the monitoring hook 4 and the monitoring hook 6 are located. First dialing test information obtained by the monitoring hook 4 is shown in Table 2, and first dialing test information obtained by the monitoring hook 6 is shown in Table 3.

**Table 2**

| Packet ID | VM-B3 (identifier of the instance) | |
|---|---|---|
| | Capture time | Quantity of packets |
| Packet 1 | 1657953711530 | 8 |

**Table 3**

| Packet ID | VM-B1 (identifier of the instance) | |
|---|---|---|
| | Capture time | Quantity of packets |
| Packet 1 | 1657953711531 | 10 |

In some embodiments, as shown in FIG. 8A and FIG. 8B, the monitoring hook 4 reports the obtained first dialing test information to a dialing test data analysis module, and the monitoring hook 6 reports the obtained first dialing test information to the dialing test data analysis module. The dialing test data analysis module integrates the two pieces of first dialing test information to obtain second dialing test information.

For example, after the dialing test data analysis module integrates the information in Table 2 and Table 3, obtained second dialing test information is shown in Table 4.

**Table 4**

| Packet ID | VM-B1 (identifier of the instance) | | VM-B3 (identifier of the instance) | |
|---|---|---|---|---|
| | Capture time | Quantity of packets | Capture time | Quantity of packets |
| Packet 1 | 1657953711531 | 10 | 1657953711530 | 8 |

In some embodiments, the second dialing test information may further include the content in Table 4.

S603: The platform reports the second dialing test information to a control platform.

S604: The control platform analyzes the second dialing test information, to obtain dialing test result information.

S605: The control platform displays the dialing test result information.

The dialing test result information indicates information such as a dialing test path of the dialing test data from a source instance to a destination instance, a node on which a packet loss occurs, time at which the dialing test data enters the platform and time at which the dialing test data exits the platform, a delay of transmitting the dialing test data by a node, a delay of transmitting data on a path, and a path on which a packet loss occurs.

The control platform can collect second dialing test information from multiple platforms, and integrate and analyze the second dialing test information of the multiple platforms, to obtain information such as a transmission path of the dialing test data, a node on which a packet loss occurs, and time at which the dialing test data enters a platform and time at which the dialing test data exits a platform.

For example, as shown in FIG. 8A and FIG. 8B, the dialing test data is divided into 10 packets and sent from the virtual machine VM-A1 to the virtual machine VM-B1. The monitoring hook 6 captures eight packets 1, and the monitoring hook captures 10 packets 1. In this case, a dialing test result analysis module on the control platform determines that a packet loss occurs on the node on which the monitoring hook 6 is located.

For another example, as shown in FIG. 8A and FIG. 8B, the dialing test data is divided into 10 packets and sent from the virtual machine VM-A1 to the virtual machine VM-B1. The monitoring hook 1, the monitoring hook 2, the monitoring hook 4, and the monitoring hook 6 all capture 10 packets 1, and the monitoring hook 3 captures 8 packets 1. In this case, a dialing test result analysis module on the control platform determines that a packet loss occurs on a node A-3.

For another example, the cloud platform includes two primary nodes, namely, nodes deployed in an active-active manner. During execution of a dialing test task, if the dialing test data passes through only one of the primary nodes, and does not pass through the other primary node, the other primary node is abnormal.

The foregoing is an example description of the dialing test method performed by the dialing test system. Next, based on the dialing test system and the dialing test method described in the foregoing embodiments, another dialing test method according to an embodiment of this application is described in detail.

FIG. 9 is a schematic flowchart of a dialing test method according to an embodiment of this application. The dialing test method provided in this embodiment of this application can be applied to the control platform in the dialing test system corresponding to FIG. 3. As shown in FIG. 9, the dialing test method provided in this embodiment of this application includes the following steps S901 to S903.

S901: Obtain dialing test information configured by a user, where the dialing test information includes an identifier of a source instance and an identifier of a destination instance, the source instance is run on a first platform, the destination instance is run on a second platform, and the first platform and the second platform belong to different vendors.

S902: Generate a dialing test task based on the dialing test information, where the dialing test task indicates the source instance to send dialing test data to the destination instance.

The dialing test information indicates a start environment and an end environment in which the dialing test task is to be executed. The dialing test information includes the identifier of the source instance and the identifier of the destination instance, for example, an IP address of the source instance and an IP address of the destination instance. For example, the dialing test information may be the task information described in S406.

In this embodiment of this application, a control platform is a user-oriented platform. The user can configure dialing test information for multiple platforms in a data center network of the user through the control platform. It should be noted that the user in this embodiment of this application is a cloud user, that is, the tenant described in the embodiments corresponding to FIG. 4 to FIG. 8B.

In some embodiments, the control platform has a human-machine interaction function, and the user configures the dialing test information through human-machine interaction with the control platform. On the deployment interface shown in FIG. 5b-1 to FIG. 5b-3, the user can configure the dialing test information through the deployment interface. For details, refer to the detailed descriptions of S404 in the embodiment corresponding to FIG. 4. Details are not described herein again.

In this embodiment of this application, both the first platform and the second platform are platforms in the data center network of the user, for example, the cloud platform A, the cloud platform B, and the non-cloud network C shown in FIG. 3. The first platform and the second platform belong to different vendors. For example, a cloud provider of cloud platform A is A, and a cloud provider of cloud platform B is B.

In some embodiments, the first platform and/or the second platform are/is private cloud platforms/a private cloud platform.

The dialing test data may be divided into at least one packet and sent from the source instance to the destination instance. The dialing test task may indicate the identifier of the source instance and the identifier of the destination instance. For details of S902, refer to the detailed descriptions of S406 in the embodiment corresponding to FIG. 4. Details are not described herein again.

S903: Run the dialing test task, and obtain dialing test result data from the first platform and the second platform.

After generating the dialing test task, the control platform can run the dialing test task.

In a possible implementation, running the dialing test task may be: After generating the dialing test task, the control platform prompts, through a display module, the user whether to perform a dialing test, and displays a confirmation control. As shown in FIG. 10, content "Do you want to perform a dialing test" is displayed on an interface, and a control 1001 and a control 1002 are displayed. When the user clicks the control 1001, the user confirms to perform the dialing test, and the control platform delivers the dialing test task to a monitoring hook on a node on which the source instance is located. When the user clicks the control 1002, the user cancels dialing test.

In another possible implementation, after generating the dialing test task, the control platform directly delivers the dialing test task to a monitoring hook on a node on which the source instance is located.

In this embodiment of this application, after the dialing test task is delivered to the monitoring hook, the monitoring hook constructs dialing test data, and the source instance sends the dialing test data to the destination instance, to complete dialing test. In a dialing test process, a monitoring hook on a node through which the dialing test data passes can monitor the dialing test data, to obtain dialing test result data. For a specific process, refer to the detailed descriptions of S601 to S603 in the embodiment corresponding to FIG. 6. Details are not described herein again.

In this embodiment of this application, after running the dialing test task, the control platform can obtain dialing test result data from at least the first platform and the second platform.

In some embodiments, the dialing test information carries an identifier of the dialing test data, for example, an ID of the dialing test data, a name of the dialing test data, or a name of the dialing test task. The dialing test data carries the identifier of the dialing test data. In a process in which the dialing test data passes through a platform, a monitoring hook on the platform can monitor the dialing test data based on the identifier in the dialing test data, to obtain data that carries the identifier of the dialing test data. The first platform and the second platform can upload, to the control platform, the data that carries the identifier of the dialing test data. After obtaining the data that carries the identifier of the dialing test data and that is reported by the platform, the control platform analyzes and sorts the data to generate dialing test result data.

It should be noted that dialing test result data generated by different platforms is different.

In this embodiment of this application, in the dialing test process, in a process in which the first platform transmits the dialing test data to the second platform, the dialing test data may pass through another platform, or may directly arrive at the second platform from the first platform. If the dialing test data needs to pass through the another platform, the control platform can obtain the dialing test result data from the another platform.

For a specific process in which the control platform obtains the dialing test result data, refer to the detailed descriptions of S601 to S603 in the embodiment corresponding to FIG. 6. The dialing test result data is equivalent to the second dialing test information recorded in S601 to S603. Details are not described herein again.

In some embodiments, the control platform summarizes the dialing test result data from all the platforms, so that address information of an instance on a traffic path between instances and fault information of the instance can be obtained. For details, refer to the detailed descriptions of S604 and S605 in the embodiment corresponding to FIG. 6. Details are not described herein again.

In some embodiments, the control platform can further display the address information and the fault information of the instance, so that an operation and maintenance personnel on a user side perform operation and maintenance on the faulty instance or platform.

In some embodiments, before S901, the method further includes a preset process of a monitoring hook. Specifically, the control platform can receive a first input of the user, and deliver, based on the first input, monitoring hooks to the multiple platforms of the user, where the multiple platforms include the first platform and the second platform, for the monitoring hooks to perform traffic monitoring on the multiple platforms.

Specifically, the control platform can display a monitoring hook orchestration interface. As shown in FIG. 5a-1 to FIG. 5a-3, the user can enter, on the orchestration interface, information for orchestrating a monitoring hook, for example, the identifier of the dialing test data. For details, refer to the detailed descriptions of S401 in the embodiment corresponding to FIG. 4. Details are not described herein again.

In a possible implementation, the first input may further include identities, and the identity is an identity of a monitoring hook required by the user. Multiple monitoring hooks may be preset on the control platform. The control platform determines, from the multiple preset monitoring hooks based on the identities, monitoring hooks corresponding to the identities, and delivers the monitoring hooks corresponding to the identities to nodes on the multiple platforms.

In another possible implementation, the first input includes a monitoring policy indicative of a manner of monitoring data by the monitoring hook. For example, the monitoring hook monitors the dialing test data through packet capture. In addition, the monitoring policy further indicates another function of the monitoring hook, for example, information that needs to be captured when the dialing test data is monitored, and an identifier of monitored dialing test data.

The control platform generates a monitoring hook based on a manner, indicated by the monitoring policy, of monitoring the dialing test data.

In this embodiment of this application, the monitoring hook includes the identifier of the dialing test data, for example, an identity of the dialing test data, an identity of the dialing test task, or the name of the dialing test task. The monitoring hook monitors the dialing test data based on the identity of the dialing test data, for example, perform packet capture on the dialing test data.

According to this embodiment of this application, on a basis of a control platform on a tenant side, a tenant can configure dialing test information, namely, a source instance and a destination instance of dialing test, through the control platform. The source instance and the destination instance are run on different platforms, and the platforms on which the source instance and the destination instance are located are provided by different vendors. In this way, the control platform can perform the dialing test on the source instance and the destination instance based on the dialing test information, to obtain information generated based on dialing test data from the source instance to the destination instance in a dialing test process, and monitor connectivity between the source instance and the destination instance based on the information. In this way, the tenant can perform unified operation and maintenance on multiple platforms in a data center network. This facilitates operation and maintenance on the multiple platforms in the data center network by the tenant, and improves tenant experience.

Based on a same concept as the method embodiment of the present invention, an embodiment of the present invention further provides a dialing test apparatus. The dialing test apparatus includes several modules, and the modules are configured to perform steps in a dialing test methodaccording to an embodiment of the present invention. Division of the modules is not limited herein. It may be clearly understood by persons skilled in the art that, in actual application, the steps in the dialing test method provided in this embodiment of the present invention may be allocated to different modules for implementation as required. In other words, an inner structure of the apparatus is divided into different modules to implement all or a part of the functions described above. The modules in embodiments may be integrated into one processing unit, or each unit may exist alone physically, or two or more modules may be integrated into one unit. The integrated unit may be implemented in a form of hardware, or may be implemented in a form of a software functional unit. In addition, specific names of the modules are merely for ease of distinguishing between the modules, but are not intended to limit the protection scope of the present invention. For specific working processes of the modules in the foregoing apparatus, refer to corresponding processes in the foregoing method embodiments. Details are not described herein again.

For example, the dialing test apparatus is configured to perform the dialing test method according to an embodiment of the present invention. FIG. 11 is a diagram of a structure of a dialing test apparatus according to an embodiment of this application. As shown in FIG. 11, the dialing test apparatus provided in this embodiment of this application includes:
an obtaining module 1101, configured to obtain dialing test information configured by a user, where the dialing test information includes an identifier of a source instance and an identifier of a destination instance, the source instance is run on a first platform, the destination instance is run on a second platform, and the first platform and the second platform belong to different vendors;
a generation module 1102, configured to generate a dialing test task based on the dialing test information, where the dialing test task indicates the source instance to send dialing test data to the destination instance; and
a running module 1103, configured to: run the dialing test task, and obtain dialing test result data from the first platform and the second platform.

Here, the user is a tenant who leases a cloud resource from a cloud provider.

In some embodiments, at least one of the first platform and the second platform is a cloud platform.

In this embodiment of this application, the user can configure the dialing test information through the control platform, where the dialing test information includes a source instance and a destination instance of dialing test, and the dialing test task is generated based on the dialing test information configured by the user. The dialing test task is run. The source instance sends dialing test data to the destination instance to perform a dialing test on two instances on different platforms. In a dialing test process, information generated by the dialing test data from the source instance to the destination instance can be collected to monitor connectivity between the source instance and the destination instance. In this way, a tenant can perform unified operation and maintenance on multiple platforms in a data center network. This facilitates operation and maintenance on the multiple platforms in the data center network by the tenant, and improves tenant experience.

In a possible implementation, the first platform and/or the second platform are/is private cloud platforms/a private cloud platform.

In this way, the user can perform unified management on the multiple platforms in the data center network of the user based on an administrator account of a private cloud, for example, perform unified operation and maintenance on the multiple platforms. This facilitates operation and maintenance on the multiple platforms in the data center network by the tenant.

In a possible implementation, the apparatus further includes:
a receiving module, configured to receive a first input of the user; and
a deployment module, configured to deliver, based on the first input, monitoring hooks to multiple platforms of the user, where the multiple platforms include the first platform and the second platform, for the monitoring hooks to perform traffic monitoring on the multiple platforms.

In some examples, the monitoring hook may be a script or code.

In this way, the user can deploy the monitoring hooks on the multiple platforms through the control platform, to monitor connectivity between instances on the multiple platforms, so as to implement unified operation and maintenance on the multiple platforms. This improves convenience of multi-platform operation and maintenance.

In a possible implementation, the first input carries identities, and the deployment module is configured to:
obtain, from multiple preset monitoring hooks based on the identities, monitoring hooks corresponding to the identities; and
deliver the monitoring hooks to the multiple platforms.

In this way, the user can configure the multiple monitoring hooks in advance. Different monitoring hooks monitor traffic in different manners. Different monitoring hooks correspond to different identities. The control platform determines, from the multiple preset monitoring hooks based on an identity entered by the user, a monitoring hook required by the user. This facilitates unified operation and maintenance on the multiple platforms by the user and user experience.

In a possible implementation, the first input includes a monitoring policy indicative of a manner of monitoring data by the monitoring hook.

The deployment module is configured to deliver, according to the monitoring policy, the monitoring hook to the multiple platforms of the user.

The monitoring policy includes at least performing traffic packet capture.

In this way, the user can configure the monitoring policy based on a requirement of the user, so that the control platform generates a monitoring hook that meets the requirement of the user. This facilitates unified operation and maintenance on the multiple platforms by the user and user experience.

In a possible implementation, the monitoring hook includes an identifier of the dialing test data, so that the monitoring hook monitors the dialing test data based on the data identifier.

In this way, the monitoring hook can monitor the dialing test data based on the data identifier, to monitoring connectivity between two instances, and implement unified operation and maintenance on the multiple platforms.

In a possible implementation, the apparatus further includes:
an analysis module, configured to summarize the dialing test result data, to obtain address information of an instance on a traffic path between the instances and fault information of the instance.

In this way, the user can determine, based on summarized dialing test result data, whether an instance is faulty between two instances, and perform operation and maintenance on a faulty platform.

In a possible implementation, the apparatus further includes:
a display module, configured to display the address information and the fault information of the instance, to perform operation and maintenance on the instance based on the address information and the fault information of the instance.

In this way, the user can intuitively locate the faulty instance, to perform unified operation and maintenance on the multiple platforms. This facilitates operation and maintenance on a data center network by the user.

In a possible implementation, the dialing test information further includes the identifier of the dialing test data, and the running module is configured to: obtain, from the first platform and the second platform, data that carries the identifier, and generate the dialing test result data.

In this way, the control platform can monitor a path of the dialing test data from the source instance to the destination instance, to monitor connectivity between the source instance and the destination instance.

According to this embodiment of this application, on a basis of a control platform on a tenant side, a tenant can configure dialing test information, namely, a source instance and a destination instance of dialing test, through the control platform. The source instance and the destination instance are run on different platforms, and the platforms on which the source instance and the destination instance are located are provided by different vendors. In this way, the control platform can perform a dialing test on the source instance and the destination instance based on the dialing test information, to obtain information generated based on dialing test data from the source instance to the destination instance in a dialing test process, and monitor connectivity between the source instance and the destination instance based on the information. In this way, the tenant can perform unified operation and maintenance on multiple platforms in a data center network. This facilitates operation and maintenance on the multiple platforms in the data center network by the tenant, and improves tenant experience.

The obtaining module, the generation module, and the running module may be implemented by using software, or may be implemented by using hardware. For example, the obtaining module is used as an example below. The obtaining module may be an application. The application can display a page through a display apparatus, and the user enters information, such as the dialing test information described in this embodiment of this application, through the page displayed by the display apparatus, so that the obtaining module can obtain the dialing test information entered by the user. Similarly, for implementations of the generation module and the running module, refer to the implementation of the obtaining module.

A module is used as an example of a software functional unit, and the obtaining module may include code run on a compute instance. The computing instance may include at least one of a physical host (a computing device), a virtual machine, and a container. Further, there may be one or more computing instances. For example, the obtaining module may include code run on multiple hosts/virtual machines/containers. It should be noted that the multiple hosts/virtual machines/containers used to run the code may be distributed in a same region (region), or may be distributed in different regions. Further, the multiple hosts/virtual machines/containers used to run the code may be distributed in a same availability zone (availability zone, AZ), or may be distributed in different AZs. Each AZ includes one data center or multiple data centers that are geographically close to each other. Generally, one region may include multiple AZs.

Similarly, the multiple hosts/virtual machines/containers used to run the code may be distributed in a same virtual private cloud (virtual private cloud, VPC), or may be distributed in multiple VPCs. Generally, one VPC is set in one region. A communication gateway needs to be set in each VPC for communication between two VPCs in a same region or between VPCs in different regions. The VPCs are interconnected through the communication gateway.

A module is used as an example of a hardware functional unit, and the obtaining module may include at least one computing device, for example, a server. Alternatively, the obtaining module may be a device implemented by an application-specific integrated circuit (application-specific integrated circuit, ASIC) or a programmable logic device (programmable logic device, PLD), or the like. The PLD may be implemented by using a complex programmable logical device (complex programmable logical device, CPLD), a field-programmable gate array (field-programmable gate array, FPGA), a generic array logic (generic array logic, GAL), or any combination thereof.

Multiple computing devices included in the obtaining module may be distributed in a same region, or may be distributed in different regions. The multiple computing devices included in the obtaining module may be distributed in a same AZ, or may be distributed in different AZs. Similarly, the multiple computing devices included in the obtaining module may be distributed in a same VPC, or may be distributed in multiple VPCs. The multiple computing devices may be any combination of computing devices such as a server, an ASIC, a PLD, a CPLD, an FPGA, and a GAL.

It should be noted that, in another embodiment, the obtaining module may be configured to perform any step in the dialing test method, the generation module may be configured to perform any step in the dialing test method, the running module may be configured to perform any step in the dialing test method, and the steps implemented by the obtaining module, the generation module, and the running module may be specified as required. The obtaining module, the generation module, and the running module separately implement different steps in the dialing test method to implement all functions of the dialing test apparatus.

This application further provides a dialing test system. As shown in FIG. 3, the dialing test system includes a control platform, a first platform, and a second platform.

The control platform is configured to perform the dialing test method provided in embodiments of this application, to monitor dialing test data between the first platform and the second platform.

The control platform, the first platform, and the second platform may all be implemented by using software, or may be implemented by using hardware. For example, the following describes an implementation of the control platform. Similarly, for implementations of the first platform and the second platform, refer to the implementation of the control platform.

A module is used as an example of a software functional unit, and the control platform may include code run on a compute instance. The computing instance may be at least one of computing devices such as a physical host (computing device), a virtual machine, and a container. Further, there may be one or more computing devices. For example, the control platform may include code running on multiple hosts/virtual machines/containers. It should be noted that the multiple hosts/virtual machines/containers used to run the application may be distributed in a same region, or may be distributed in different regions. The multiple hosts/virtual machines/containers used to run the code may be distributed in a same AZ, or may be distributed in different AZs. Each AZ includes one data center or multiple data centers that are geographically close to each other. Generally, one region may include multiple AZs.

Similarly, the multiple hosts/virtual machines/containers used to run the code may be distributed in a same VPC, or may be distributed in multiple VPCs. Generally, one VPC is set in one region. A communication gateway needs to be set in each VPC for communication between two VPCs in a same region or between VPCs in different regions. The VPCs are interconnected through the communication gateway.

The module is used as an example of a hardware functional unit. The control platform may include at least one computing device, for example, a server. Alternatively, the control platform may be a device implemented by using an ASIC, a PLD, or the like. The PLD may be implemented by a CPLD, an FPGA, GAL, or any combination thereof.

The multiple computing devices included in the control platform may be distributed in a same region, or may be distributed in different regions. The multiple computing devices included in the control platform may be distributed in a same AZ, or may be distributed in different AZs. Similarly, the multiple computing devices included in the control platform may be distributed on a same VPC, or may be distributed on multiple VPCs. The multiple computing devices may be any combination of computing devices such as a server, an ASIC, a PLD, a CPLD, an FPGA, and a GAL.

This application further provides a computing device 1200. As shown in FIG. 12, the computing device 1200 includes a bus 1201, a processor 1202, a memory 1203, and a communication interface 1204. The processor 1202, the memory 1206, and the communication interface 1204 communicate with each other through the bus 1201. The computing device 1200 may be a server or a terminal device. It should be understood that quantities of processors and memories in the computing device 1200 are not limited in this application.

The bus 1201 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 12. However, this does not indicate that there is only one bus or only one type of bus. The bus 1201 may include a path for transferring information between various components (for example, the memory 1203, the processor 1202, and the communication interface 1204) of the computing device 1200.

The processor 1202 may include any one or more of processors, such as a central processing unit (central processing unit, CPU), a graphics processing unit (graphics processing unit, GPU), a microprocessor (microprocessor, MP), or a digital signal processor (digital signal processor, DSP).

The memory 1203 may include a volatile memory (volatile memory), for example, a random access memory (random access memory, RAM). The processor 1202 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1203 stores executable program code, and the processor 1202 executes the executable program code to separately implement functions of the obtaining module, the generation module, and the running module, to implement the dialing test method. In other words, the memory 1203 stores instructions used to perform the dialing test method.

Alternatively, the memory 1203 stores executable code, and the processor 1202 executes the executable code to separately implement functions of the control platform, the first platform, and the second platform, to implement the dialing test method. In other words, the memory 1203 stores instructions used to perform the dialing test method.

The communication interface 1204 uses a transceiver module, for example, but not limited to, a network interface card or a transceiver, to implement communication between the computing device 1200 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 13, the computing device cluster includes at least one computing device 1200. Memories 1203 in one or more computing devices 1200 in the computing device cluster may store same instructions for performing the dialing test method.

In some possible implementations, the memories 1203 in the one or more computing devices 1200 in the computing device cluster may alternatively respectively store some instructions for performing the dialing test method. In other words, a combination of the one or more computing devices 1200 may jointly execute the instructions for performing the dialing test method.

It should be noted that the memories 1203 in different computing devices 1200 in the computing device cluster may store different instructions, and different instructions are separately used to perform some functions of the control platform. In other words, the instructions stored in the memories 1203 in the different computing devices 1200 may implement functions of one or more modules in an obtaining module, a generation module, and a running module.

In some possible implementations, the one or more computing devices in the computing device cluster may be connected through a network. The network may be a wide area network, a local area network, or the like. FIG. 14 shows a possible implementation. As shown in FIG. 14, two computing devices 1200A and 1200B are connected through a network. Specifically, each computing device is connected to the network through a communication interface of the computing device. In this possible implementation, a memory 1203 of the computing device 1200A stores an instruction for performing a function of the obtaining module. In addition, the memory 1203 in the computing device 1200B stores instructions for performing functions of the generation module and the running module.

A connection manner between computing device clusters shown in FIG. 14 may be that, in consideration that the dialing test method provided in this application requires interaction between multiple platforms and a large amount of data analysis, it is considered that functions implemented by the generation module and the running module are performed by the computing device 1200B.

It should be understood that functions of the computing device 1200A shown in FIG. 14 may alternatively be completed by multiple computing devices 1200. Similarly, functions of the computing device 1200B may alternatively be completed by multiple computing devices 1200.

An embodiment of this application further provides another computing device cluster. For a connection relationship between computing devices in the computing device cluster, refer to the connection manners of the computing device cluster in FIG. 13 and FIG. 14 similarly. A difference lies in that memories 1203 in one or more computing devices 1200 in the computing device cluster may store same instructions for performing the dialing test method.

In some possible implementations, the memories 1203 in the one or more computing devices 1200 in the computing device cluster may alternatively respectively store some instructions for performing the dialing test method. In other words, a combination of the one or more computing devices 1200 may jointly execute the instructions for performing the dialing test method.

It should be noted that memories 1203 in different computing devices 1200 in the computing device cluster may store different instructions for performing some functions of a dialing test system. In other words, the instructions stored in the memories 1203 in different computing devices 1200 may implement functions of one or more apparatuses on the control platform, the first platform, and the second platform.

An embodiment of this application further provides a computer program product including instructions. The computer program product may be software or a program product that includes the instructions and that can be run on a computing device or stored in any usable medium. When the computer program product runs on at least one computing device, the at least one computing device is enabled to perform the dialing test method.

An embodiment of this application further provides a computer-readable storage medium. The computer-readable storage medium may be any usable medium accessible by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions indicate the computing device to perform the dialing test method, or indicate the computing device to perform the dialing test method.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of the present invention.

## Claims

1. A dialing test method, applied to a control platform, wherein the method comprises:
obtaining dialing test information configured by a user, wherein the dialing test information comprises an identifier of a source instance and an identifier of a destination instance, the source instance is run on a first platform, the destination instance is run on a second platform, and the first platform and the second platform belong to different vendors;
generating a dialing test task based on the dialing test information, wherein the dialing test task indicates the source instance to send dialing test data to the destination instance; and
running the dialing test task, and obtaining dialing test result data from the first platform and the second platform.

2. The method according to claim 1, wherein the first platform and/or the second platform are/is private cloud platforms/a private cloud platform.

3. The method according to claim 1, wherein the method further comprises:
receiving a first input of the user; and
delivering, based on the first input, monitoring hooks to multiple platforms of the user, wherein the multiple platforms comprise the first platform and the second platform, for the monitoring hooks to perform traffic monitoring on the multiple platforms.

4. The method according to claim 3, wherein the first input carries identities, and the delivering, based on the first input, the monitoring hooks to the multiple platforms of the user comprises:
obtaining, from multiple preset monitoring hooks based on the identities, monitoring hooks corresponding to the identities; and
delivering the monitoring hooks to the multiple platforms.

5. The method according to claim 3, wherein the first input comprises a monitoring policy indicative of a manner of monitoring data by the monitoring hook; and
the delivering, based on the first input, the monitoring hooks to the multiple platforms of the user comprises:
delivering, according to the monitoring policy, the monitoring hooks to the multiple platforms of the user, wherein
the monitoring policy comprises at least performing traffic packet capture.

6. The method according to any one of claims 3 to 5, wherein the monitoring hook comprises an identifier of the dialing test data, for the monitoring hook to monitor the dialing test data based on the identifier of the dialing test data.

7. The method according to claim 1, wherein the method further comprises:
summarizing the dialing test result data, to obtain address information of an instance on a traffic path between the instances and fault information of the instance.

8. The method according to claim 7, wherein the method further comprises:
displaying the address information and the fault information of the instance, to perform operation and maintenance on the instance based on the address information and the fault information of the instance.

9. The method according to any one of claims 1 to 8, wherein the dialing test information further comprises the identifier of the dialing test data, and the obtaining the dialing test result data from the first platform and the second platform comprises:
obtaining, from the first platform and the second platform, data that carries the identifier, and generating the dialing test result data.

10. A dialing test apparatus, used in a control platform, wherein the apparatus comprises:
an obtaining module, configured to obtain dialing test information configured by a user, wherein the dialing test information comprises an identifier of a source instance and an identifier of a destination instance, the source instance is run on a first platform, the destination instance is run on a second platform, and the first platform and the second platform belong to different vendors;
a generation module, configured to generate a dialing test task based on the dialing test information, wherein the dialing test task indicates the source instance to send dialing test data to the destination instance; and
a running module, configured to: run the dialing test task, and obtain dialing test result data from the first platform and the second platform.

11. The apparatus according to claim 10, wherein the first platform and/or the second platform are/is private cloud platforms/a private cloud platform.

12. The apparatus according to claim 10, wherein the apparatus further comprises:
a receiving module, configured to receive a first input of the user; and
a deployment module, configured to deliver, based on the first input, monitoring hooks to multiple platforms of the user, wherein the multiple platforms comprise the first platform and the second platform, for the monitoring hooks to perform traffic monitoring on the multiple platforms.

13. The apparatus according to claim 12, wherein the first input carries identities, and the deployment module is configured to:
obtain, from multiple preset monitoring hooks based on the identities, monitoring hooks corresponding to the identities; and
deliver the monitoring hooks to the multiple platforms.

14. The apparatus according to claim 12, wherein the first input comprises a monitoring policy indicative of a manner of monitoring data by the monitoring hook; and
the deployment module is configured to deliver, according to the monitoring policy, the monitoring hooks to the multiple platforms of the user, wherein
the monitoring policy comprises at least performing traffic packet capture.

15. The apparatus according to any one of claims 12 to 14, wherein the monitoring hook comprises an identifier of the dialing test data, for the monitoring hook to monitor the dialing test data based on the identifier of the dialing test data.

16. The apparatus according to claim 10, wherein the apparatus further comprises:
an analysis module, configured to summarize the dialing test result data, to obtain address information of an instance on a traffic path between the instances and fault information of the instance.

17. The apparatus according to claim 16, wherein the apparatus further comprises:
a display module, configured to display the address information and the fault information of the instance, to perform operation and maintenance on the instance based on the address information and the fault information of the instance.

18. The apparatus according to any one of claims 10 to 17, wherein the dialing test information further comprises the identifier of the dialing test data, and the running module is configured to: obtain, from the first platform and the second platform, data that carries the identifier, and generate the dialing test result data.

19. A dialing test system, wherein the system comprises a control platform, a first platform, and a second platform; and
the control platform is configured to perform the method according to any one of claims 1 to 9, to monitor dialing test data between the first platform and the second platform.

20. A computing device cluster, comprising at least one computing device, wherein each computing device comprises a processor and a memory; and
the processor of the at least one computing device is configured to execute instructions stored in the memory of the at least one computing device, to cause the computing device cluster to perform the method according to any one of claims 1 to 9.

21. A computer program product comprising instructions, wherein when the instructions are run by a computing device cluster, the computing device cluster is caused to perform the method according to any one of claims 1 to 9.

22. A computer-readable storage medium, comprising computer program instructions, wherein when the computer program instructions are executed by a computing device cluster, the computing device cluster performs the method according to any one of claims 1 to 9.
